# FASCICULE DE BREVET EUROPEEN

(11) **EP 3 090 645 B1**
(45) Date de publication et mention de la délivrance du brevet: **22.01.2020**
(21) Numéro de dépôt: 15166256.6
(22) Date de dépôt: 04.05.2015
(51) Int. Cl.: B23K 1/00, B23K 1/19, B23K 35/26, B23K 35/28, B23K 35/30, A44C 27/00, A44C 17/04, B23K 35/32, B23K 35/36, B23K 35/02

(54) **PROCÉDÉ DE MONTAGE D'UN ÉLÉMENT DÉCORATIF SUR UN SUPPORT ET LEDIT SUPPORT**
MONTAGEVERFAHREN EINES SCHMUCKELEMENTS AUF EINER HALTERUNG, UND ENTSPRECHENDE HALTERUNG
METHOD FOR MOUNTING A DECORATIVE ELEMENT ON A MOUNTING AND SAID MOUNTING

(43) Date de publication de la demande: 09.11.2016
(73) Titulaire: The Swatch Group Research and Development Ltd., 2074 Marin (CH)
(72) Inventeur: Dubach, Alban, 2502 Bienne (CH); Bourban, Stewes, 1589 Chabrey (CH); Winkler, Yves, 3185 Schmitten (CH); Vuille, Pierry, 2338 Les Emibois (CH); Martin, Jean-Claude, 2037 Montmollin (CH)
(74) Mandataire: ICB SA

(56) Documents cités:
- CH-A2- 707 349
- CH-A2- 707 350
- US-A- 5 702 501

## Description

### Domaine de l'invention

La présente invention se rapporte à un procédé de montage d'au moins un élément décoratif sur un support. L'invention se rapporte également à un support décoratif destiné à recevoir au moins un élément décoratif et pourvu d'au moins une cavité remplie d'un matériau de remplissage formant un substrat dans lequel au moins un logement est aménagé, ledit logement étant agencé pour recevoir ledit élément décoratif.

### Arrière-plan de l'invention

Il est connu dans l'art antérieur des supports décoratifs destinés à être utilisés sur un objet portable, tel qu'une montre ou un bijou, et présentant des éléments décoratifs, tels que des pierres, et notamment des pierres précieuses.

Pour cela, le support est généralement réalisé en alliage métallique et est usiné pour y former des logements. Les éléments décoratifs peuvent être montés dans ces logements par chassage ou par sertissage. En cas de montage par sertissage, des moyens d'accroché se présentant sous la forme de crochets sont réalisés lors de cet usinage. Généralement, ces crochets sont réalisés avec la matière formant l'objet portable c'est-à-dire de façon monobloc avec l'objet. Lorsqu'un élément décoratif doit être serti, ce dernier est placé dans un logement et les moyens d'accroché sont rabattus à froid par déformation plastique de manière à maintenir ledit élément décoratif dans le logement. Cette méthode de sertissage est largement répandue pour sertir des pierres sur des supports en métal car ce dernier présente une capacité de déformation plastique avantageuse. Cette capacité est encore plus avantageuse avec des métaux précieux comme l'or, car ces métaux précieux sont ductiles et peuvent être facilement façonnés.

Néanmoins, un inconvénient de cette méthode est qu'elle est cantonnée aux supports réalisés en métaux ou alliages métalliques ductiles. Or, de plus en plus de pièces d'horlogerie sont réalisées dans des matériaux ne présentant pas de déformation plastique, souvent durs et/ou fragiles, comme par exemple les céramiques, le saphir, le silicium, les composites (par exemple les cermets) ou encore des alliages intermétalliques.

De ce fait, il n'est plus possible d'utiliser la méthode actuelle pour monter des éléments décoratifs comme des pierres précieuses.

Cette opération de sertissage peut être remplacée par une opération de collage. Le collage a pour désavantage de ne pas assurer une tenue des pierres à 100% car contrairement au sertissage, cette technique n'implique pas une retenue mécanique des pierres. En effet, les zones collées étant dans la majorité des cas exposées à l'environnement extérieur (humidité, sueur, UV, pollution de l'air,...), la tenue du collage sur le long terme est rendue difficile. Par conséquent, la tenue des pierres n'est pas assurée, ce qui n'est pas acceptable pour des produits de qualité. Il y a également un risque que la colle relargue des produits nocifs et/ou corrosifs pour les autres composants de la montre ou du bijou. De plus, il est nécessaire d'usiner au préalable les éléments décoratifs, ce qui peut être difficile et couteux, notamment si les éléments décoratifs présentent des géométries compliquées.

Une autre solution a été proposée dans le brevet EP 2 315 673, cette solution consistant notamment à incruster un élément décoratif réalisé dans un métal amorphe par pressage dans un support. Ce procédé nécessite l'utilisation de préformes amorphes. Toutefois, le nombre d'alliages existant sous forme amorphe est limité de sorte qu'il n'est pas toujours possible de trouver un alliage présentant la couleur recherchée s'accordant avec la montre ou le bijou. Par exemple, des alliages amorphes présentant une couleur dorée de teinte jaune ou rouge n'existent pas. En outre, le procédé d'incrustation nécessite d'appliquer une certaine force de pressage, de sorte qu'il peut difficilement être utilisé lorsque le support est un matériau fragile.

Une autre solution a été proposée dans la demande EP 2 796 297, cette solution consistant notamment à sertir un élément décoratif dans un substrat réalisé en alliage amorphe. Toutefois, les différents procédés décrivent un chauffage puis un refroidissement du métal amorphe qui doit nécessairement être rapide pour préserver l'état amorphe du métal. Ce refroidissement rapide crée un choc thermique qui peut entrainer l'apparition de contraintes internes dans le support et ainsi entrainer des déformations voire des fissures. De plus, le procédé de sertissage nécessite, au moment du sertissage, de déformer les moyens d'accroché, ce qui peut s'avérer délicat lorsque l'on utilise un métal amorphe qui peut être difficile à déformer du fait de ses propriétés élastiques spécifiques. Par ailleurs, comme indiqué ci-dessus, le nombre d'alliages existant sous forme amorphe est limité de sorte qu'il n'est pas toujours possible de trouver un alliage présentant la couleur recherchée s'accordant avec la montre ou le bijou.

Les documents CH707350, CH707349 et US5702501 divulguent aussi des procédés de moulage.

### Résumé de l'invention

L'invention a notamment pour objectif de pallier les différents inconvénients des procédés de montage d'un élément décoratif connus.

Plus précisément, un objectif de l'invention est de fournir un procédé de montage d'un élément décoratif sur un support, permettant d'utiliser un support fragile.

L'invention a également pour objectif de fournir un procédé de montage d'un élément décoratif sur un support, permettant de s'adapter à la composition et à la couleur du support.

L'invention a également pour objectif de fournir un procédé de montage d'un élément décoratif sur un support, permettant une mise en œuvre simple et économique.

A cet effet, la présente invention concerne un procédé selon la revendication 1.

Un tel procédé permet d'utiliser un matériau de remplissage composite présentant un aspect pâteux, simple à appliquer localement sans contrainte sur le support, et ne nécessitant pas de refroidissement rapide. En outre, le matériau de remplissage composite offre une grande flexibilité dans le choix de la poudre métallique, du liant et d'éventuels additifs, ce qui permet d'améliorer les affinités du matériau de remplissage composite avec le support.

La présente description concerne également un support décoratif destiné à recevoir au moins un élément décoratif et pourvu d'au moins une cavité remplie d'un matériau de remplissage formant un substrat dans lequel au moins un logement est aménagé, ledit logement étant agencé pour recevoir ledit élément décoratif, ledit matériau de remplissage étant obtenu à partir d'un matériau de remplissage composite comprenant au moins une poudre métallique et au moins un liant organique et présentant, au moment du remplissage, une viscosité comprise entre 1 000 mPa.s et 1 000 000 mPa.s.

L'utilisation d'un matériau composite permet d'adapter la couleur du substrat à celle du support.

### Brève description des dessins

Les buts, avantages et caractéristiques de la présente invention apparaîtront plus clairement dans la description détaillée suivante d'au moins une forme de réalisation de l'invention donnée uniquement à titre d'exemple non limitatif et illustrée par les dessins annexés sur lesquels :
- la figure 1 représente de manière schématique un support décoratif; et
- les figures 2 à 7 illustrent schématiquement les étapes d'un procédé de montage selon l'invention.

### Description détaillée de l'invention

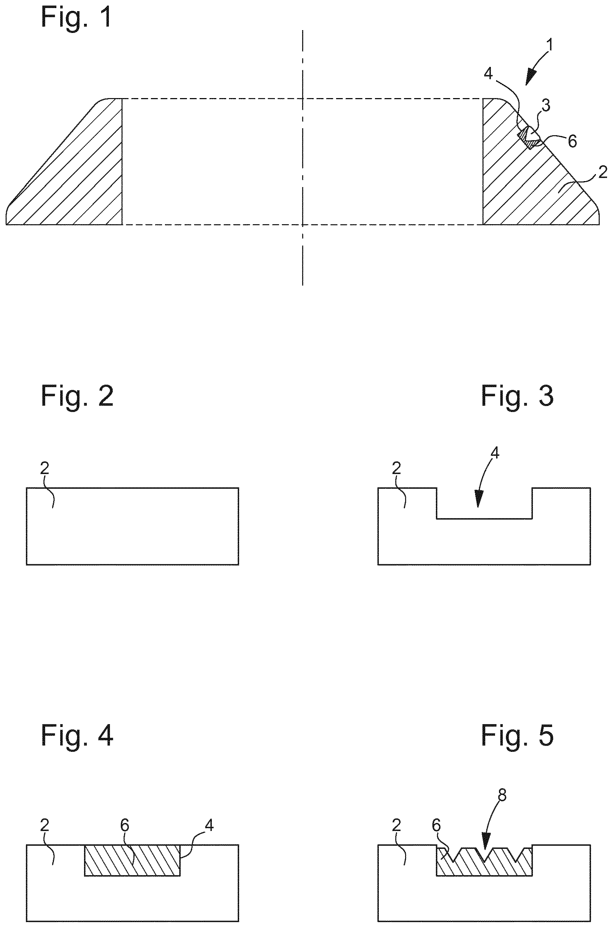

En référence à la figure 1, il est représenté une pièce décorative 1 comprenant un support décoratif 2 selon l'invention dans lequel est monté un élément décoratif 3. La pièce décorative 1 est par exemple une lunette de montre incrustée d'indices qui constituent des éléments décoratifs. La pièce décorative 1 pourrait également être une glace de montre ou un cadran ou toute partie intérieure ou extérieure d'une montre ou d'une pièce d'horlogerie. La pièce décorative 1 peut être également un stylo ou un bouton de manchette ou un article de bijouterie comme une bague ou une boucle d'oreille.

Le support 2 peut être tout type de matériau, et plus particulièrement tout matériau dur et fragile, ne présentant pas de déformation plastique suffisante pour la mise en œuvre d'un procédé de sertissage classique. Le matériau du support 2 présente une température de fusion supérieure à celle du matériau de remplissage composite. Avantageusement, le support 2 est réalisé en un matériau choisi parmi le groupe comprenant les céramiques, les cermets, le saphir, le rubis, le diamant, le silicium, le quartz ou le verre. La surface du support 2 sur laquelle l'élément décoratif 3 est monté peut être plane ou courbe (concave ou convexe).

Le support 2 présente une cavité 4 remplie d'un matériau de remplissage formant un substrat 6, ledit substrat 6 étant utilisé pour recevoir l'élément décoratif 3 et permettre le montage dudit élément décoratif 3 sur le support 2. Notamment, le substrat 6 peut comprendre des moyens d'accroché 5 se déformant pour maintenir l'élément décoratif 3.

A cet effet, et conformément à l'invention, le procédé de montage de l'élément décoratif 3 sur le support 2 comprend la première étape a) consistant à se munir d'un support 2, de préférence dans un matériau qui ne se déforme pas plastiquement tel qu'une céramique, comme le montre la figure 2, et à réaliser au moins une cavité 4 dans le support 2, comme le montre la figure 3. La cavité 4 peut être réalisée par exemple par usinage par laser ou toute autre technique appropriée au matériau du support 2. De préférence, la cavité 4 présente des flancs perpendiculaires à la surface visible du support 2. Afin d'améliorer l'accroche finale du substrat 6 dans le support 2, il est possible d'usiner dans la cavité 4 des dépouilles négatives ou des trous d'accroché ou tout autre structuration particulière du fond de la cavité.

De plus, le procédé de montage de l'élément décoratif 3 sur le support 2 peut comprendre avantageusement, avant l'étape c), une étape supplémentaire h) de métallisation de la surface de la cavité 4. Les parois de la cavité 4 peuvent être recouvertes d'une couche de métallisation permettant d'améliorer l'accroche du matériau de remplissage composite sur le support 2. Une telle couche de métallisation peut être à base d'or, nickel ou chrome et présente une température de fusion supérieure à celle du matériau de remplissage composite.

L'étape b) du procédé consiste à se munir d'un élément décoratif 3. Ces éléments décoratifs peuvent être des pierres précieuses, comme des diamants ou rubis, ou des pierres non précieuses comme des zircons, ou tout autre élément décoratif approprié.

L'étape suivante c) du procédé consiste à remplir la cavité 4 d'un matériau de remplissage composite. Conformément à l'invention, le matériau de remplissage composite comprend au moins une poudre métallique, au moins un liant organique et d'éventuels additif, et présente, au moment du remplissage, une viscosité comprise entre 1 000 mPa.s et 1 000 000 mPa.s.

Un tel matériau de remplissage composite se trouve par exemple sous la forme de pâte à braser, commercialisée par exemple par la société Hilderbrand & Cie SA. La présentation du matériau de remplissage composite sous la forme d'une pâte permet une application locale et très facile du matériau de remplissage composite dans la cavité 4. Notamment, la forme pâteuse du matériau de remplissage composite permet de remplir la cavité 4 sans aucune sollicitation mécanique du support 2. De ce fait, si le support 2 est réalisé en un matériau fragile, il ne risque pas de se casser. La viscosité du matériau de remplissage composite, au moment du remplissage, c'est-à-dire au moment de son application dans la cavité 4, est de préférence comprise entre 5 000 mPa.s et 500 000 mPa.s. Le matériau de remplissage composite peut être thixotrope et présenter une viscosité supérieure au repos.

De préférence, la poudre métallique comprend au moins un élément métallique choisi parmi le groupe comprenant, sous la forme d'élément ou d'alliage, l'or, l'argent, le cuivre, le platine, le palladium, l'aluminium, le titane, le zinc, l'étain, le gallium, l'indium, le nickel, le silicium, le germanium, et leurs mélanges.

Des exemples de composition de poudre métallique sont indiqués dans le tableau ci-dessous :

| Base | Famille de compositions | Exemples (en % poids) |
|---|---|---|
| Au | Or fin | Au99.99 |
| | Or 18ct | Au-Cu-*X* |
| | Or 14ct | Au-Cu-Ag-*X* |
| | Or 9ct | Au-Cu-Pd-Ag-*X* avec *X* = Zn, Sn, |
| | Au-Si, Au-Ge, Au-Sn | Ga, et/ou In |
| | Au-Cu | Au81Si 19 |
| | | Au80Cu20 |
| Ag | Ag-Cu | Ag72Cu28 |
| | Ag-Cu-*X*(*X*= Sn, Zn, Ti, P, | Ag56Cu22Zn17Sn5, |
| | et/ou Ga) | Ag65Cu20Pd15 |
| | Ag-Pd-Ga | Ag82Pd9Ga9 |
| | Ag-Al | Ag95Al5 |
| Cu | Cu | Cu99.99 |
| | Cu-P | Cu92.8P7.2 |
| | Cu-Ag-P | Cu80Ag15P5 |
| | Cu-Zn | Cu60Zn40 |
| | Cu-Mn-Ni | Cu67.5Mn23.5Ni9 |
| Pt | Pt fin | Pt99.99 |
| Pd | Pd fin | Pd99.99 |
| | Pd-Ni | Pd60Ni40 |
| | Pd-Ni-Si | Pd47Ni47Si6 |
| Al | Al-Si | Al88Si12 |
| | Al-Si-*X*(*X* = Cu, Mg, et/ou Zn) | Al86Si10Cu4 |
| Ti | Ti-Ni-Cu | Ti70Ni15Cu15 |
| Zn | Zn-Al | Zn78Al22 |
| Sn | Sn-Ag | Sn90Ag10 |
| | Sn-Cu | Sn97Cu3 |
| | Sn-In | Sn48In52 |
| Ni | Ni-P | Ni89P11 |
| | Ni-Cr-P | Ni76Cr14P10 |
| | Ni-Cr-Si-Fe-B | Ni73.2Cr14Si4.5Fe4.5B3.1 |

Les alliages précieux, à base de platine, palladium et or sont particulièrement préférés car ils offrent une bonne résistance à la corrosion et une bonne stabilité de la couleur (pas d'oxydation ni ternissement au porter).

Le diamètre des particules métalliques utilisées pour la poudre métallique est typiquement inférieur à 500 µm, et de préférence inférieur à 100 µm. La distribution des tailles de particules peut être unimodale ou multimodale. Une distribution multimodale (p.ex. bimodale) peut être choisie en vue d'augmenter le pourcentage en volume de la phase métallique dans le volume total du composite. D'une manière avantageuse, le matériau de remplissage composite comprend au moins 50% en volume, et de préférence au moins 60% en volume, de poudre métallique par rapport au volume total du matériau de remplissage composite.

Le liant organique est généralement sous la forme d'un mélange de liants organiques choisis selon les propriétés désirées du matériau de remplissage composite à l'état pâteux. De préférence, le liant organique est choisi parmi le groupe comprenant la cellulose, la glycérine, des glycols, des résines, des distillats de pétrole, et leurs mélanges. Le liant sera éliminé lors de l'étape de chauffage du matériau de remplissage composite.

Avantageusement, le matériau de remplissage composite peut comprendre des additifs, tel qu'au moins un agent décapant ou additif de flux, pour désoxyder les surfaces et améliorer la mouillabilité entre ledit matériau de remplissage composite liquide et le support. Les additifs de flux sont formés d'un mélange de sels minéraux et/ou des acides tels que acide borique, borax, bore, borates alcalins (pentaborate de potassium, tetraborate de potassium,...), (bi-)fluorures alcalins (fluorure d'aluminium, bifluorure de potassium,...), chlorures (chlorure de zinc, chlorure de lithium, chlorure d'ammonium,...) acides (acide chlorhydrique, acide phosphorique, etc...). Les additifs seront éliminés lors de l'étape de chauffage du matériau de remplissage composite.

L'étape suivante d) du procédé consiste à chauffer le matériau de remplissage composite à une température supérieure à son point de fusion pour le faire fondre et le rendre liquide. Le chauffage du matériau de remplissage composite est réalisé par un apport d'énergie tel un four, un faisceau laser, un faisceau ionique ou tout autre moyen thermique. La température dépend de la nature du matériau de remplissage composite, et peut être comprise entre 200°C et 1 000°C par exemple. Le matériau de remplissage composite liquide présente l'avantage de bien remplir tout le volume de la cavité 4, quelle que soit sa forme, notamment par sa bonne mouillabilité et/ou par effet capillaire.

L'étape suivante e) du procédé consiste à laisser refroidir le matériau de remplissage. Le cycle de température de refroidissement est standard. Typiquement, au cours du refroidissement, la température est abaissée de 10°C/min à 100°C/min dans des fours de brasage industriel. Aucun refroidissement rapide n'est appliqué. Le matériau de remplissage refroidi et solidifié constitue un substrat 6 sous une forme cristalline.

Les étapes c) à e) peuvent être réalisées successivement au moins deux fois. En effet, après le premier remplissage de la cavité 4, un retrait du matériau de remplissage peut se créer dans la cavité 4, après refroidissement. Il est donc nécessaire d'appliquer au moins une deuxième couche de matériau de remplissage composite dans la cavité 4, de chauffer, puis de refroidir, conformément aux étapes c) à e) décrites ci-dessus. Les étapes c) à e) sont répétées jusqu'à ce que le matériau de remplissage atteigne la hauteur désirée dans la cavité 4.

L'éventuelle étape suivante i), entre les étapes e) et f), consiste à éliminer le matériau de remplissage présent autour de la cavité 4. Ce surplus de matériau de remplissage autour de la cavité 4 peut être enlevé par tout procédé approprié, tel que polissage, usinage, etc...

On obtient alors un support 2 tel que représenté sur la figure 4, comprenant une cavité 4 remplie d'un substrat 6 non amorphe et uniquement métallique, le liant organique et les additifs ayant été brûlés ou s'étant évaporés lors de l'étape d) de chauffage.

L'étape suivante f) du procédé consiste à réaliser au moins un logement 8 dans le substrat 6, comme le montre la figure 5. Cette étape peut être réalisée par des procédés classiques tels que l'usinage, le fraisage, le perçage, etc.

L'étape suivante g) du procédé consiste à monter l'élément décoratif 3 dans le logement 8.

Selon une première variante, l'étape g) du montage de l'élément décoratif 3 est réalisée par chassage. Pour ce faire, l'élément décoratif 3 est réaliser de manière à présenter des dimensions légèrement plus grandes que celles de la cavité 4 et à rentrer à force dans ladite cavité 4.

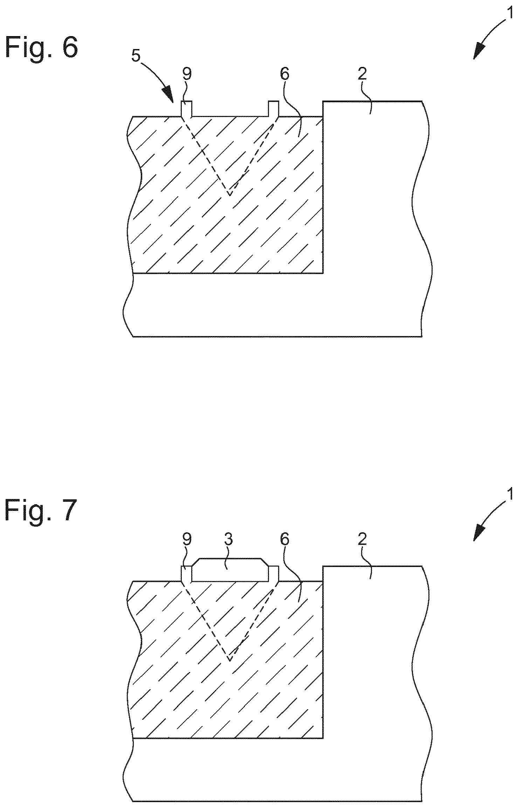

Selon une deuxième variante, l'étape g) du montage de l'élément décoratif 3 est réalisée par sertissage. Dans ce cas, l'étape g) comprend la réalisation de moyens d'accroché 5 dans le substrat 6 et le sertissage de l'élément décoratif 3 par déformation desdits moyens d'accroché 5 de manière à maintenir ledit élément décoratif 3 dans son logement 8. Plus précisément, les moyens d'accroché 5 se présentent sous la forme d'au moins un élément de sertissage 9. Cet élément de sertissage 9, dans le cas par exemple d'un sertissage grains, consiste en des plots ou grains agencés sur le pourtour de chaque logement 8. Ces plots 9, visibles sur les figures 6 et 7, sont réalisés par usinage, avant ou après le perçage des logements 8. En effet, lors de l'usinage des logements 8, de la matière du substrat 6 est enlevée de sorte à former ces éléments de sertissage 9. De préférence, dans le cas d'un sertissage grain, il est prévu d'avoir idéalement quatre grains de sertissage 9 à proximité de logement 8.

Il est bien évident que d'autres types de sertissage peuvent être envisagés, tels que le sertissage clos, le sertissage baguette, le sertissage rail ou sertissage invisible sont envisageables. Par exemple, le sertissage clos consiste en un unique élément de sertissage 9 s'étendant sur la périphérie de l'élément décoratif 3. Le sertissage baguette est utilisé pour sertir les éléments décoratifs 3 taillés en baguette. Ce sertissage consiste à prévoir des éléments de sertissage 9 s'étendant parallèlement à chaque côté de l'élément décoratif 3 venant se rabattre sur ce dernier. Pour le sertissage invisible, il est prévu que les éléments de sertissage 9 soient des portions saillantes agencées dans le logement 8. Ces portions saillantes coopèrent avec au moins une gorge réalisée sur ledit élément décoratif 3 de sorte que le sertissage se fait en insérant l'élément décoratif 3 dans le logement 8 jusqu'à ce que les portions saillantes s'insèrent dans ladite gorge.

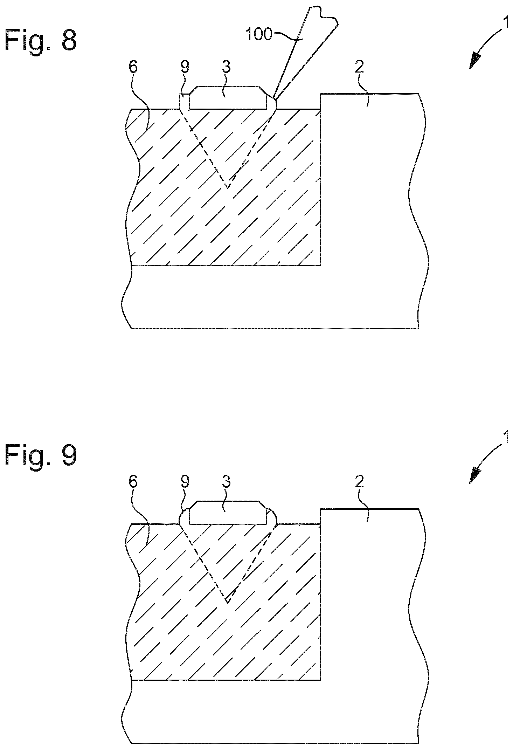

L'étape de sertissage consiste à poser l'élément décoratif 3 dans le logement 8 et à déformer les moyens d'accroché 5 pour les plaquer sur ledit élément décoratif 3. De ce fait, ce dernier est maintenu dans le logement 8. La déformation des moyens d'accroché 5 se fait au moyen d'un outil appelé perloir 100 utilisé pour déformer chaque élément de sertissage 9, comme le montre la figure 8. On obtient alors l'élément décoratif 3 serti tel que représenté sur la figure 9. Le matériau de remplissage constituant le substrat 6 est suffisamment ductile pour permettre une déformation des moyens d'accroché.

Il est bien évident que tout autre procédé approprié pour le montage de l'élément décoratif dans le substrat peut être utilisé. Un avantage de l'invention est qu'elle permet de monter l'élément décoratif dans n'importe quel type de matériau, et notamment dans un matériau dur et/ou fragile. En effet, le principe utilisé est un principe de pièce rapportée c'est-à-dire qu'un substrat en matériau pouvant accepter une déformation est rapporté dans un matériau non déformable plastiquement de manière à permettre un montage d'un élément décoratif, tel qu'un sertissage, et à donner l'illusion que c'est ce matériau non déformable plastiquement qui est serti. Le matériau du support, non déformable plastiquement, ne subit aucune contrainte mécanique, et ne risque donc pas de se briser.

Pour que l'illusion d'un montage dans le support 2 soit intacte, il est prévu que la largeur de la cavité 4 soit idéalement égale à celle de l'élément décoratif 3. En conséquence, la distance entre l'élément décoratif 3 et le bord de la cavité 4 doit être réduite au minimum, et dans l'idéal nulle, pour que le matériau de remplissage ne soit pas visible et donner l'impression que l'élément décoratif 3 reste noyé dans le support 2 en céramique par exemple et non dans le matériau de remplissage. En pratique, la distance entre l'élément décoratif 3 et le bord de la cavité 4 dépendra des dimensions et formes des éléments décoratifs 3. A titre d'exemple, pour un élément décoratif 3 d'un diamètre de 1 mm, la distance entre l'élément décoratif 3 et le bord de la cavité 4 sera de 0.45 mm.

En outre, l'utilisation d'un matériau de remplissage composite permet d'avoir un très grand nombre de compositions différentes, permettant de réaliser un substrat dont la couleur est ajustée par exemple à la couleur de l'élément décoratif ou par rapport aux autres composants de la pièce dans laquelle le support décoratif est utilisé.

Par ailleurs, l'utilisation d'un matériau de remplissage composite permet d'avoir un très grand nombre de compositions différentes permettant d'améliorer les affinités du matériau de remplissage composite avec le support. Notamment l'utilisation d'un matériau de remplissage composite offre une grande flexibilité dans le choix de la composition afin d'accorder la chimie du matériau de remplissage composite à celle du support. Par exemple, l'élément de base constituant la poudre métallique du matériau de remplissage composite est le même que l'élément de base constituant le support 2 afin de garantir une affinité chimique entre le matériau de remplissage composite et le support. Il est possible également de choisir la composition du matériau de remplissage composite pour que ce dernier présente un coefficient de dilatation thermique similaire à celui du support. L'ajout d'agent décapant permet d'améliorer la mouillabilité du matériau de remplissage composite.

## Revendications

1. Procédé de montage d'au moins un élément décoratif (3) sur un support (2) comprenant les étapes de :
a. se munir d'un support (2) pourvu d'au moins une cavité (4);
b. se munir d'au moins un élément décoratif (3);
c. remplir ladite cavité avec un matériau de remplissage;
d. chauffer le matériau de remplissage;
e. laisser refroidir le matériau de remplissage issu de l'étape d) pour former un substrat (6);
f. réaliser au moins un logement (8) dans ledit substrat (6);
g. monter ledit élément décoratif (3) dans ledit logement (8);
le procédé étant **caractérisé en ce que** :
- le matériau de remplissage est un matériau de remplissage composite comprenant au moins une poudre métallique et au moins un liant organique et présentant, au moment du remplissage, une viscosité comprise entre 1 000 mPa.s et 1 000 000 mPa.s;
- à l'étape d), le matériau de remplissage est chauffé à une température supérieure à son point de fusion pour le rendre liquide;
- à l'étape e), le matériau de remplissage issu de l'étape d) est refroidi et solidifié pour former un substrat (6) sous une forme cristalline.

2. Procédé selon la revendication 1, **caractérisé en ce que** le matériau de remplissage composite comprend au moins 50% en volume, et de préférence au moins 60% en volume, de poudre métallique par rapport au volume total du matériau de remplissage composite.

3. Procédé selon l'une des revendications précédentes, **caractérisé en ce que** le matériau de remplissage composite comprend en outre au moins un agent décapant.

4. Procédé selon l'une des revendications précédentes, **caractérisé en ce que** la poudre métallique du matériau de remplissage composite comprend au moins un élément métallique choisi parmi le groupe comprenant, sous la forme d'élément ou d'alliage, l'or, l'argent, le cuivre, le platine, le palladium, l'aluminium, le titane, le zinc, l'étain, le gallium, l'indium, le nickel, le silicium, le germanium, et leurs mélanges.

5. Procédé selon l'une des revendications précédentes, **caractérisé en ce que** le liant organique du matériau de remplissage composite est choisi parmi le groupe comprenant la cellulose, la glycérine, des glycols, des résines, des distillats de pétrole, et leurs mélanges.

6. Procédé selon l'une des revendications précédentes, **caractérisé en ce que** l'étape g) est réalisée par chassage.

7. Procédé selon l'une des revendications précédentes, **caractérisé en ce que** l'étape g) est réalisée par sertissage, et **en ce que** l'étape g) comprend la réalisation de moyens d'accroche (5) dans le substrat (6) et le sertissage de l'élément décoratif (3) par déformation desdits moyens d'accroche (5) de manière à maintenir ledit élément décoratif (3) dans son logement (8).

8. Procédé selon l'une des revendications précédentes, **caractérisé en ce qu'**il comprend en outre, avant l'étape c), une étape h) de métallisation de la surface de la cavité (4) du support (2).

9. Procédé selon l'une des revendications précédentes, **caractérisé en ce qu'**il comprend en outre, entre les étapes e) et f), une étape i) consistant à éliminer le matériau de remplissage présent autour de la cavité.

10. Procédé selon l'une des revendications précédentes, **caractérisé en ce que** les étapes c) à e) sont réalisées successivement au moins deux fois.

## Patentansprüche

1. Montageverfahren mindestens eines Schmuckelements (3) auf einer Halterung (2), umfassend die Schritte:
a. Bereitstellen einer Halterung (2), die mit mindestens einem Hohlraum (4) versehen ist;
b. Bereitstellen mindestens eines Schmuckelements (3);
c. Füllen des Hohlraums mit einem Füllmaterial;
d. Erwärmen des Füllmaterials;
e. Das Füllmaterial aus Schritt d) abkühlen lassen, um ein Substrat (6) zu bilden;
f. Herstellen mindestens einer Aufnahme (8) in dem Substrat (6);
g. Montieren des Schmuckelements (3) in die Aufnahme (8);
wobei das Verfahren **dadurch gekennzeichnet ist, dass**:
- das Füllmaterial ein Füllkompositwerkstoff ist, der mindestens ein Metallpulver und mindestens ein organisches Bindemittel enthält und während des Füllens eine Viskosität im Bereich von 1 000 mPa·s bis 1 000 000 mPa·s aufweist;
- im Schritt d) das Füllmaterial auf eine Temperatur oberhalb seines Schmelzpunkts erwärmt wird, um es zu verflüssigen;
- im Schritt e) das aus dem Schritt d) stammende Füllmaterial abgekühlt und verfestigt wird, um ein Substrat (6) in kristalliner Form zu bilden.

2. Verfahren nach Anspruch 1, **dadurch gekennzeichnet, dass** der Füllkompositwerkstoff mindestens 50 Vol.-% und vorzugsweise 60 Vol.-% eines Metallpulvers in Bezug auf das Gesamtvolumen des Füllkompositwerkstoffs enthält.

3. Verfahren nach einem der vorhergehenden Ansprüche, **dadurch gekennzeichnet, dass** der Füllkompositwerkstoff ferner mindestens ein eine Abbeize enthält.

4. Verfahren nach einem der vorhergehenden Ansprüche, **dadurch gekennzeichnet, dass** das Metallpulver des Füllkompositwerkstoffs mindestens ein Metallelement enthält, ausgewählt aus der Gruppe, die in Form eines Elements oder einer Legierung Gold, Silber, Kupfer, Platin, Palladium, Aluminium, Titan, Zink, Zinn, Gallium, Indium, Nickel, Silicium, Germanium und deren Gemische umfasst.

5. Verfahren nach einem der vorhergehenden Ansprüche, **dadurch gekennzeichnet, dass** das organische Bindemittel des Füllkompositwerkstoffs aus der Gruppe ausgewählt ist, die Zellulose, Glycerin, Glykole, Harze, Erdöldestillate und deren Gemische umfasst.

6. Verfahren nach einem der vorhergehenden Ansprüche, **dadurch gekennzeichnet, dass** der Schritt g) durch Einpressen ausgeführt wird.

7. Verfahren nach einem der vorhergehenden Ansprüche, **dadurch gekennzeichnet, dass** der Schritt g) durch Crimpen ausgeführt wird und dass der Schritt g) das Herstellen von Mitteln (5) zum Einhaken in dem Substrat (6) und das Crimpen des Schmuckelements (3) durch Verformen der Einhakmittel (5) umfasst, um das Schmuckelement (3) in seiner Aufnahme (8) zu halten.

8. Verfahren nach einem der vorhergehenden Ansprüche, **dadurch gekennzeichnet, dass** es ferner vor Schritt c) einen Schritt h) zum Metallisieren der Oberfläche des Hohlraums (4) der Halterung (2) umfasst.

9. Verfahren nach einem der vorhergehenden Ansprüche, **dadurch gekennzeichnet, dass** es ferner zwischen den Schritten e) und f) einen Schritt i) umfasst, der darin besteht, das um den Hohlraum vorhandene Füllmaterial zu entfernen.

10. Verfahren nach einem der vorhergehenden Ansprüche, **dadurch gekennzeichnet, dass** die Schritte c) bis e) nacheinander mindestens zweimal ausgeführt werden.

## Claims

1. Method for mounting at least one decorative element (3) on a mounting (2) comprising the steps of:
a. procuring a mounting (2) provided with at least one cavity (4);
b. procuring at least one decorative element (3);
c. filling said cavity with a filling material;
d. heating the filling material;
e. allowing the filling material from step d) to cool to form a substrate (6);
f. producing at least one recess (8) in said substrate (6);
g. mounting said decorative element (3) inside said recess (8);
the method being **characterised in that**:
- the filling material is a composite filling material comprising at least one metal powder and at least one organic binder and having, at the time of filling, a viscosity that lies in the range 1,000 mPa.s to 1,000,000 mPa.s;
- in step d), the filling material is heated to a temperature exceeding the melting point thereof in order to transform same into a liquid;
- in step e), the filling material from step d) is cooled and solidified to form a substrate (6) in crystalline form.

2. Method according to claim 1, **characterised in that** the composite filling material comprises at least 50 vol%, and preferably at least 60 vol%, of metal powder relative to the total volume of the composite filling material.

3. Method according to one of the preceding claims, **characterised in that** the composite filling material further comprises at least one pickling agent.

4. Method according to one of the preceding claims, **characterised in that** the metal powder of the composite filling material comprises at least one metal element selected from the group comprising in element or alloy form, gold, silver, copper, platinum, palladium, aluminium, titanium, zinc, tin, gallium, indium, nickel, silicon, germanium, and mixtures thereof.

5. Method according to one of the preceding claims, **characterised in that** the organic binder of the composite filling material is selected from the group comprising cellulose, glycerol, glycols, resins, petroleum distillates, and mixtures thereof.

6. Method according to one of the preceding claims, **characterised in that** step g) is carried out by driving in.

7. Method according to one of the preceding claims, **characterised in that** step g) is carried out by crimping, and **in that** step g) comprises the production of gripping means (5) in the substrate (6) and the crimping of the decorative element (3) by deformation of said gripping means (5) so as to hold said decorative element (3) in the recess (8) thereof.

8. Method according to one of the preceding claims, **characterised in that** it further comprises, before step c), a step h) of metal-plating the surface of the cavity (4) of the mounting (2).

9. Method according to one of the preceding claims, **characterised in that** it further comprises, between steps e) and f), a step i) consisting of removing the filling material present around the cavity.

10. Method according to one of the preceding claims, **characterised in that** steps c) to e) are carried out successively at least twice.
